Europäisches Patentamt

European Patent Office

Office européen des brevets

(19)

(11) Veröffentlichungsnummer: **0 294 674 B1**

## (12) EUROPÄISCHE PATENTSCHRIFT

(45) Veröffentlichungstag der Patentschrift: 27.12.91

(51) Int. Cl.⁵: **D01H 1/241**, G01P 3/56

(21) Anmeldenummer: 88108578.1

(22) Anmeldetag: 27.05.88

(54) **Verfahren und Vorrichtung zur Überwachung von Tangentialriemen bei einer Maschine zum Herstellen gedrehter oder gezwirnter Fäden.**

(30) Priorität: **12.06.87 DE 3719736**

(43) Veröffentlichungstag der Anmeldung:
**14.12.88 Patentblatt 88/50**

(45) Bekanntmachung des Hinweises auf die Patenterteilung:
**27.12.91 Patentblatt 91/52**

(84) Benannte Vertragsstaaten:
**CH DE FR IT LI**

(56) Entgegenhaltungen:
DE-A- 1 523 272
DE-A- 1 932 609
DE-A- 2 314 045
DE-B- 1 235 641
DE-B- 1 293 661

PATENT ABSTRACTS OF JAPAN, Band 10, Nr. 84 (P-442)[2141], 3. April 1986; & JP-A-60 220 863 (TOYOTA JIDOSHA K.K.) 05-11-1985

ARCHIV FÜR TECHNISCHES MESSEN, Band 145-4, August 1954, Seiten 173-176; W. OE-STERLIN et al.: "Messung von Drehzahldifferenzen und Schlupf"

(73) Patentinhaber: **Zinser Textilmaschinen GmbH Hans-Zinser-Strasse Postfach 1480 W-7333 Ebersbach/Fils(DE)**

(72) Erfinder: **König, Herbert Beethovenstrasse 3/1 W-7333 Ebersbach/Fils(DE)**
Erfinder: **Dinkelmann, Friedrich, Dipl.-Ing. Neuffenstrasse 10 W-7324 Rechberghausen(DE)**
Erfinder: **Heinz, Werner Sommerrainstrasse 119 W-7000 Stuttgart 50(DE)**
Erfinder: **Städele, Norbert Papiermühle 86 W-7320 Göppingen(DE)**

(74) Vertreter: **Schieschke, Klaus, Dipl.-Ing. et al Patentanwälte Dipl.-Ing. E. Eder Dipl.-Ing. K. Schieschke Elisabethstrasse 34 W-8000 München 40(DE)**

EP 0 294 674 B1

Beschreibung

Die Erfindung bezieht sich auf ein Verfahren und eine Vorrichtung zum Überwachen von Tangentialriemen, wie sie in einer Maschine zur Herstellung gedrehter oder gezwirnter Fäden eingesetzt sind, nach dem Oberbegriff des Anspruchs 1 bzw. des Anspruchs 4.

Es hat sich in der Praxis gezeigt, daß an Spinnereimaschinen, an denen eine Vielzahl von Arbeitsaggregaten, insbesondere Spindeln, gruppenweise durch je einen gesonderten Tangentialriemen angetrieben werden, bisweilen einzelne Tangentialriemen einen unzulässig hohen Schlupf aufweisen. Dieser Schlupf kann zu Fehlern im Produkt, beispielsweise zu geringe Garndrehung, oder zu fehlerhaftem Arbeiten der Maschine führen.

Als Stand der Technik ist darüber hinaus bereits eine Einrichtung an bahnführenden Maschinen zur Längenmessung und zum Feststellen von Längenänderungen an der laufenden Bahn bekannt (DE-A-23 14 045). Derartige Maschinen können beispielsweise als Mehrfarben-Rotationsdruckmaschinen ausgebildet sein. Hierbei ist das von Vorratsrollen ablaufende, relativ empfindliche Bahnmaterial während der Handhabung, z. B. durch äußere Einflüsse, Dehnungen oder Schrumpfungen unterworfen, welche einer einwandfreien Ausführung mehrerer aufeinanderfolgender Druckvorgänge entgegenstehen, diese im zu bedruckenden Bahnmaterial auftretenden Längenschwankungen müssen daher durch Nachregulieren entsprechender Registerwalzen ausgeglichen werden. Solche Maschinen weisen deshalb Längenmeßeinrichtungen mit einem Sollwertgeber im Bereich eines ersten Bahnführungszylinders und eine Vielzahl Ist-Wert-Meßstellen an entsprechenden Abschnitten am Weg des bahnartigen Materials auf.

Über einen Impulsauftragekopf werden Impulse auf ein ferromagnetisches Datenträgermaterial gebracht, welches vorher auf das zu bedruckende Bahnmaterial aufgetragen wurde. Die aufgebrachten Impulse werden von einem Aufnahmekopf des Sollwertgebers sowie den Abfrageköpfen an den Ist-Wert-Meßstellen erfaßt, in einem Steuergerät verarbeitet und z. B. zum Regulieren der Registerwalzen verwendet.

Zur Durchführung dieses bekannten Verfahrens ist es daher zwingend erforderlich, auf dem vorliegenden Bahnmaterial zunächst ein ferromagnetisches Datenträgermaterial aufzubringen, was sowohl zeit- als auch kostenaufwendig ist und den Anwendungsbereich dieses bekannten Verfahrens erheblich beschränkt.

Zum Stand der Technik zählen weiterhin Verfahren und Einrichtungen zur Messung von Drehzahldifferenzen und Schlupf (Literaturstelle: Archiv für Technisches Messen ATM 8/54/Seite 173 ff).

Hier wird die Anregung gegeben, den Vergleich zweier Spannungen zur Ermittlung einer Meßgröße heranzuziehen, wobei ein entsprechender apparativer und schaltungstechnischer Aufwand erforderlich ist, um die Drehzahldifferenz in hinreichender Genauigkeit zu ermitteln. Demgegenüber liegt der vorliegenden Erfindung die Aufgabe zugrunde, ein Verfahren bzw. eine Vorrichtung nach den Oberbegriffen des Anspruchs 1 bzw. des Anspruchs 4 zu schaffen, welches auf die Überwachung einer Vielzahl von Tangentialriemen gerichtet ist, um bereits bezüglich des Antriebes ein fehlerhaftes Arbeiten der Maschine mit der Folge mangelnder Garnqualität zu vermeiden.

Diese Aufgabe wird bei dem Verfahren bzw. bei der Vorrichtung gemäß den kennzeichnenden Teilen des Anspruchs 1 bzw. des Anspruchs 4 gelöst. Die Geschwindigkeit mehrerer Tangentialriemen wird also mit einer Sollgeschwindigkeit verglichen, wobei bei Überschreiten einer vorgegebenen Toleranzgrenze ein Signal abgegeben wird. Da jedoch der zu überwachende Fehler nicht schlagartig auftritt und seine Entdeckung sehr rasch erfolgt, erfolgt vorteilhafterweise die Überwachung der Riemengeschwindigkeit an den einzelnen Tangentialriemen nacheinander in zyklischer Abfolge.

Im einzelnen ist gemäß der Erfindung vorgesehen, an jedem Tangentialriemen einen Geschwindigkeitsfühler vorzusehen. Dieser Geschwindigkeitsfühler kann ein rotierender, durch den Tangentialriemen angetriebener, eine der gefühlten Riemengeschwindigkeit proportionale Spannung oder inkrementale Frequenz (Impulsfolge) abgebender Generator sein. Vorteilhafterweise kann in weiterer Ausgestaltung der Erfindung dieser Generator mit einer der Andrückrollen verbunden sein.

Nach einer anderen Ausführungsmöglichkeit der Erfindung kann ein ortsfester Sensor vorgesehen sein, welcher auf dem Tangentialriemen in gleichen Abständen angeordnete, magnetisch oder optisch abtastbare Marken fühlt und eine der Riemengeschwindigkeit proportionale Impulsfrequenz abgibt. Der Sollwert der Riemengeschwindigkeit könnte durch einen Spannungs- oder Frequenzgenerator vorgegeben werden. Dieser kann einstellbar sein und sehr genau auf die jeweilige Riemensollgeschwindigkeit eingestellt werden. Vorteilhafterweise ist jedoch ein dem Fühler oder den Fühlern an dem bzw. den Tangentialriemen entsprechender Geschwindigkeitsfühler an einem der synchron angetriebenen Antriebsmotoren der Tangentialriemen vorgesehen, der den Vorteil hat, daß der Sollwert selbsttätig gewollten oder ungewollten Veränderungen der Arbeitsgeschwindigkeit folgt.

Eine digitale, das heißt, inkrementale Erfassung und Verarbeitung der Riemengeschwindigkeit hat gegenüber einer analogen, d. h. durch eine Spannung wiedergegebene Verarbeitung den Vorteil, daß sie keinen temperaturabhängigen Drift aufweist und die zur Auswertung erforderlichen Rechenheiten kostengünstiger sind.

In weiterer Ausgestaltung der Erfindung ist die Auswerteinheit mit dem die Führungsgröße liefernden Fühler verbunden und kann einen Taktgeber aufweisen, welcher sie zyklisch mit jedem der an den einzelnen Tangentialriemen angeordneten Geschwindigkeitsfühlern verbindet. Innerhalb dieser Anschlußtakte können zeitlich begrenzte Fenster vorgesehen sein, innerhalb welchen ein Meßzyklus beginnt und endet.

Die Auswerteinheit kann weiterhin erfindungsgemäß zwei Impulszähler aufweisen, von denen einer mit dem die Führungsgröße liefernden Fühler und der andere jeweils mit dem Fühler an einem der Tangentialriemen verbunden ist. Beide Zähler werden gleichzeitig gestartet und dann, wenn der erstgenannte Fühler einen vorbestimmten Wert gezählt hat, gemeinsam stillgesetzt. Infolge des unvermeidlich auftretenden Riemenschlupfes des Tangentialriemens wird der zweite Impulszähler eine geringere Impulszahl aufweisen. In einer Vergleichseinheit werden die beiden Impulszahlen miteinander verglichen, wobei bei Überschreiten eines zulässigen Toleranzwertes des Unterschiedes ein Störsignal abgegeben wird. Durch dieses Störsignal kann eine Bedienungsperson gerufen oder die Maschine abgestellt werden. Weiterhin kann vorgesehen sein, daß eine Wiederinbetriebnahme der Maschine nur durch Fachpersonal erfolgen kann, welche dem auftretenden Fehler nachgeht und ihn behebt.

In weiterer Ausgestaltung der Erfindung kann schließlich der höchstzulässige Schlupf durch einen Wähler, beispielsweise durch einen Toleranzwähler einstellbar sein.

Die Erfindung wird nachfolgend anhand eines in der Zeichnung dargestellten Ausführungsbeispiels näher beschrieben. In der Zeichnung zeigen:

Fig. 1    eine schematische Draufsicht auf das Antriebssystem einer Spinnereimaschine,

Fig. 2    einen Schnitt durch eine Spindelbank einer Spinnereimaschine, in Seitenansicht,

Fig. 3    eine graphische Darstellung des Arbeitsablaufes des Taktgebers.

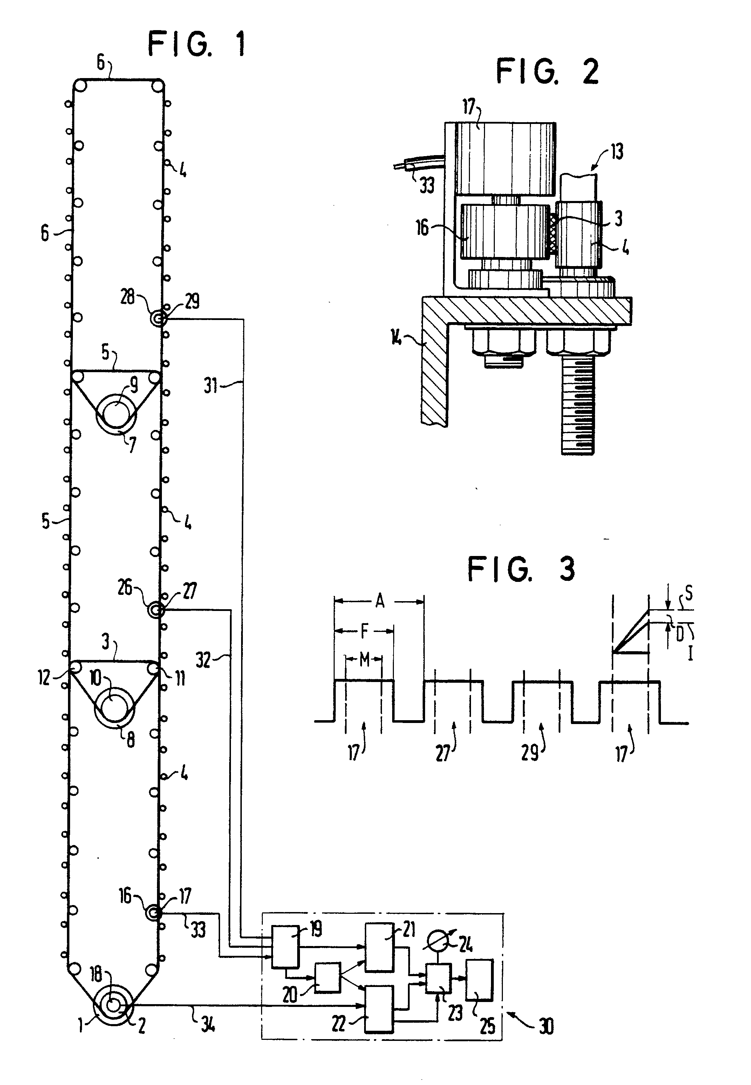

Nach Fig. 1 weist eine Spinnereimaschine mehrere, im wesentlichen synchron laufende Motoren 1, 7 und 8 auf. Jeder dieser Motoren ist mit einer Riemenscheibe 2, 9 und 10 verbunden, von denen jede einen Tangentialriemen 3, 5 und 6 antreibt. Hierbei läuft der Tangentialriemen 3 über Umlenkrollen 11 und 12, über die auch der Tangentialriemen 5 läuft; entsprechend laufen die Tangentialriemen 5 und 6 über nicht näher bezeichnete weitere Umlenkrollen.

Diese Tangentialriemen 3, 5 und 6 treiben Arbeitsaggregate, beispielsweise Spindeln einer Spinnereimaschine an, welche ihren Antrieb über schematisch dargestellte Wirtel 4 durch Anpreßung an die Tangentialriemen erhalten. Zur Verbesserung des Laufes sind, den Wirteln gegenüberliegend, Andrückrollen vorgesehen.

Erfindungsgemäß ist nach Fig. 2 oberhalb je einer Andrückrolle 16, 26, 28 je Tangentialriemen 3 bzw. 5 bzw. 6 ein Fühler 17, 27, 29 vorgesehen. Diese Fühler 17, 27 und 29 können beispielsweise als drehbare Impulsgeber ausgebildet sein, die - über Andrückrollen angetrieben - eine einer Riemenlauflänge proportionale Impulszahl abgeben.

Wie aus Fig. 2 ersichtlich, sind diese Fühler 17, 27 und 29 koaxial an den entsprechenden Andrückrollen angeordnet, welche ihrerseits die Tangentialriemen 3 bzw. 5 bzw. 6 an die Wirtel 4 andrücken, oberhalb welchen nicht näher dargestellte Arbeitsaggregate 13 der Spinnereimaschine angeordnet sind. Die gesamte Anordnung ist an einer Spindelbank 14 befestigt.

Jeder der Geschwindigkeitsfühler 17, 27 und 29 ist über eine entsprechende Leitung 31, 32, 33 nach Fig. 1 mit einem Taktgeber 19 einer Auswerteinheit 30 verbunden. Weiterhin weist mindestens einer der Antriebsmotoren 1, 7, 8 einen die Antriebsgeschwindigkeit erfassenden, den Fühlern 17, 27, 29 entsprechenden Fühler 18 auf. Dieser Fühler 18 ist über eine Leitung 34 mit einem Impulszähler 22 der Auswerteinheit 30 verbunden.

Der Taktgeber 19 steht mit einem Zählerstarter 20 in Verbindung, welcher seinerseits mit dem Impulszähler 22 und einem Impulszähler 21 für die Geschwindigkeitsfühler 17, 27 und 29 in Verbindung steht.

Der Taktgeber 19 hat die Aufgabe, gemäß Fig. 3 zyklisch die Fühler 17, 27 und 29 abzurufen. Es ergibt sich hierbei jeweils ein Anschlußtakt A für jeden der nacheinander aufgerufenen Impulsfühler 17, 27 und 29. Innerhalb dieses Anschlußtaktes A ist jeweils ein zeitlich begrenztes Fenster F vorgesehen, innerhalb dessen ein Meßzyklus M beginnt und endet.

Wie vorstehend ausgeführt, weist die Auswerteinheit 30 die beiden Impulszähler 21 und 22 auf, von denen der Impulszähler 22 mit dem die Führungsgröße liefernden Fühler 18 des Antriebs 1 und der Impulszähler 21 jeweils mit dem Fühler 17, 27, 29 an einem der Tangentialriemen 3, 5 bzw. 6 verbunden ist. Durch den Zählerstarter 20 werden beide Impulszähler 21 und 22 gleichzeitig gestartet (entsprechend Fenster F in Fig. 3) und dann, wenn der Impulszähler 22 einen vorbestimmten Wert S nach Fig. 3 erreicht, gemeinsam stillgesetzt. In diesem Zeitraum hat der Zähler 21 einen geringeren Wert I ermittelt. Infolge des unvermeidlichen Riemenschlupfes liegt also der vom Impulszähler 21 ermittelte Wert unterhalb der des Impulszählers 22, weist also eine geringere Impulszahl auf. Es ergibt sich damit eine Differenz D nach Fig. 3.

In der Vergleichseinheit 23 werden die beiden Impulssummen S und I miteinander verglichen, wobei beim Überschreiten eines zulässigen Toleranzwertes D das Alarmgerät 25 betätigt wird. Durch dieses Alarmgerät 25 kann eine Bedienungsperson gerufen und/oder die Maschine abgestellt werden.

Um den Toleranzwert entsprechend des Maschinentyps variieren zu können, ist der Vergleicher 23 mit einem Wähler, insbesondere einem Toleranzwähler 24 verbunden.

Bei den in den Figuren dargestellten Ausführungsbeispielen erfolgt die Überwachung der Laufgeschwindigkeiten der Tangentialriemen 3, 5 und 6 einer Spinnereimaschine zyklisch nacheinander, und zwar mit Hilfe des Taktgebers 19 der Auswerteinheit 30, welcher gemäß Fig 3 nacheinander die Impulsfühler 17, 27 und 29 zur Auswertung aktiviert.

In nicht näher dargestellter Ausführungsform besteht auch die Möglichkeit, daß die Überwachung der Geschwindigkeit aller Tangentialriemen einer Maschine gleichzeitig erfolgt.

Durch die vorliegende Erfindung ist es möglich, die Geschwindigkeit jedes der Tangentialriemen einer Spinnereimaschine mit einer Sollgeschwindigkeit des Antriebs zu vergleichen, wobei beim Unterschreiten einer vorgegebenen Toleranzgrenze ein Signal abgegeben wird. Dadurch werden Produktfehler, beispielsweise zu geringe Garndrehung, oder fehlerhaftes Arbeiten der Spinnereimaschine vermieden.

In einer anderen, hier nicht näher dargestellten Ausführungsform der Erfindung können die Fühler 16, 18, 27, 29 als Spannungsgeneratoren ausgebildet sein, die eine ihrer Drehzahl und damit der Geschwindigkeit des sie antreibenden Antriebs bzw. Tangentialriemens proportionale Spannung abgeben. Zur Auswertung dieser analogen - Spannungssignale in der dargestellten Auswerteinheit 30 können sie in Analog/Digital-Wandlern in die digitale Singale umgesetzt werden. Es ist jedoch auch möglich, die analogen Signale analog weiterzuverarbeiten und beispielsweise den (analogen) Wert des Fühlers 18 am Antrieb mit dem (analogen) Wert eines der Fühler 16, 27, 29 an den Tangentialriemen zu vergleichen und bei Überschreiten eines maximalen Unterschiedes zwischen den beiden Signalen ein Fehlersignal abzugeben.

**Patentansprüche**

1. Verfahren zur Überwachung von Tangentialriemen (3, 5, 6), wie sie in einer Maschine zum Herstellen gedrehter oder gezwirnter Fäden eingesetzt sind, wobei Arbeitsaggregate der Maschine durch die mit Antrieben (1, 7, 8) verbundenen endlosen Tangentialriemen (3, 5, 6) bewegt und die Laufgeschwindigkeit der Tangentialriemen (3, 5, 6) überwacht werden, dadurch gekennzeichnet, daß die Überwachung der Laufgeschwindigkeit aller Tangentialriemen (3, 5, 6) einer Maschine zyklisch nacheinander erfolgt, wobei die Laufgeschwindigkeit der Tangentialriemen (3, 5, 6) mit der Antriebsgeschwindigkeit im Bereich der Antriebe (1, 7, 8) verglichen und bei Überschreiten eines feststehenden Differenzwertes (Schlupf D) zwischen beiden Geschwindigkeiten (S, I) ein Signal abgegeben wird.

2. Verfahren nach Anspruch 1, dadurch gekennzeichnet, daß die Geschwindigkeiten unmittelbar erfaßt und ausgewertet werden.

3. Verfahren nach Anspruch 1, dadurch gekennzeichnet, daß die Geschwindigkeiten als Quotienten aus erfaßten, zurückgelegten Wegdistanzen und abgemessenen Zeitintervallen erfaßt und ausgewertet werden.

4. Vorrichtung zur Überwachung von Tangentialriemen (3, 5, 6), wie sie in einer Maschine zur Herstellung gedrehter oder gezwirnter Fäden eingesetzt sind, wobei Arbeitsaggregate der Maschine mit Antrieben (1, 7, 8) über die Tangentialriemen (3, 5, 6) verbunden sind und eine Einrichtung zum Erfassen der Laufgeschwindigkeit der Tangentialriemen (3, 5, 6) vorhanden ist, dadurch gekennzeichnet, daß jedem Tangentialriemen (3, 5, 6) ein dessen Laufgeschwindigkeit erfassender Fühler (17, 27, 29) und dem Antrieb (1, 7, 8) bzw. einem der Antriebe ein weiterer, dessen bzw. deren Antriebsgeschwindigkeit (en) erfassende Fühler (18) zugeordnet und die Fühler mit mindestens einer Auswerteinheit (30) verbunden sind, wobei die Auswerteinheit (30) einen Taktgeber (19) aufweist, welcher die Auswerteinheit (30) nacheinander mit jedem der an den einzelnen Tangentialriemen (3, 5, 6) angeordneten Fühler (17, 27, 29) verbindet.

5. Vorrichtung nach Anspruch 4, wobei die Tangentialriemen (3, 5, 6) durch Andrückrollen (16, 26, 28) beaufschlagbar sind, dadurch gekennzeichnet, daß die Fühler (17, 27, 29) mit jeweils einer der Andrückrollen (16, 26, 28) bzw. dem Antrieb (1) verbundene, als Geschwindigkeitsfühler wirkende Spannungsgeneratoren ausgebildet sind.

6. Vorrichtung nach Anspruch 4, dadurch gekennzeichnet, daß die Fühler Längendistanzmarkierungen abtastende, ortsfest angeordnete Sensoren sind.

7. Vorrichtung nach Anspruch 4, dadurch gekennzeichnet, daß die Auswerteinheit (30) zwei Impulszähler (21, 22) aufweist, wobei ein Impulszähler (22) mit dem die Antriebsgeschwindigkeit liefernden Fühler (18) und der andere Impulszähler (21) jeweils mit einem der Fühler (17, 27, 29) an den Tangentialriemen (3, 5, 6) verbunden ist und daß beide Impulszähler (21, 22) mit einer Vergleichseinheit (23) und mit einem Signalgeber (25) verbunden sind.

8. Vorrichtung nach Anspruch 4, dadurch gekennzeichnet, daß der höchstzulässige Schlupf (D) durch einen Wähler (24) einstellbar ist.

## Claims

1. Method for the control of tangential belts (3, 5, 6) as used in machines for the manufacture of turned or twisted threads, whereby operating units of the machine are moved by continuous tangential belts (3, 5, 6) which are connected to drives, and the operating speed of the tangential belts (3, 5, 6) are controlled, **characterised in that** the control of the operating speed of all tangential belts (3, 5, 6) of one machine takes place cyclically one after the other, whereby the operating speed of the tangential belts (3, 5, 6) is compared with the operating speed in the region of the drives (1, 7, 8) and a signal is given if a fixed differential value (slip D) between both speeds (S, I) is exceeded.

2. Method according to claim 1, **characterised in that** the speeds are directly measured and evaluated.

3. Method according to claim 1, **characterised in that** the speeds are measured and evaluated as quotients of measured travelled path distances and measured time intervals.

4. Method for the control of tangential belts (3, 5, 6) as used in a machine for the manufacture of turned or twisted threads, whereby operating units of the machine are connected via tangential belts (3, 5, 6) to drives (1, 7, 8), having a device for measuring the operating speed of the tangential belts (3, 5, 6), **characterised in that** each tangential belt (3, 5, 6) is associated with a probe (17, 27, 29) which measures its operating speed, and in that the drive (1, 7, 8) or one of the drives respectively is associated with a further probe (18) which measures its/their drive speed and that the probes are connected to at least one evaluation unit (30) which comprises a pulse generator (19) which sequentially connects the evaluation unit (30) with each of the probes (17, 27, 29) at the individual tangential belts (3, 5, 6).

5. Device according to claim 4, whereby the tangential belts (3, 5, 6) are loaded by feed rollers (16, 26, 28), **characterised in that** the probes (17, 27, 29) are constructed to be current generators acting as speed probes and connected to one of the feed rollers (16, 26, 28) or the the drive (1) respectively.

6. Device according to claim 4, **characterised in that** the probes are fixed sensors which probe longitudinal distance markings.

7. Device according to claim 4, **characterised in that** the evaluation unit (30) comprises two pulse counters (21, 22), in which respect one pulse counter (22) is connected to the probe (18), which delivers the drive speed, and the other pulse counter (21) is connected to a respective probe (17, 27, 29) at the tangential belts (3, 5, 6), and in that both pulse counters (21, 22) are connected to a comparative unit (23) and to a signal transmitter (25).

8. Device according to claim 4, **characterised in that** the maximum admissable slip (D) is set by a selector (24).

## Revendications

1. Procédé pour surveiller des courroies tangentielles (3, 5, 6) comme celles utilisées dans une machine pour la production de fils à torsion ou retordus, selon lequel des organes de travail de la machine sont mus par les courroies tangentielles (3, 5, 6) sans fin, reliées à des entraînements (1, 7, 8), et la vitesse de défilement des courroies tangentielles (3, 5, 6) est surveillée, caractérisé en ce que l'on effectue la surveillance de la vitesse de défilement de toutes les courroies tangentielles (3, 5, 6) d'une machine de façon cyclique, l'une après l'autre, on compare la vitesse de défilement des courroies tangentielles (3, 5, 6) à la vitesse d'entraînement dans la région des entraînements (1, 7, 8) et, en cas de dépassement d'une différence fixe (glissement D) entre les deux vitesses (S, I), on déclenche la délivrance d'un signal.

2. Procédé selon la revendication 1, caractérisé en ce que l'on détecte et on exploite les vitesses directement.

3. Procédé selon la revendication 1, caractérisé en ce que l'on détecte et on exploite les vitesses sous la forme de quotients de distances de déplacement couvertes et détectées et d'intervalles de temps délimités.

4. Dispositif pour la surveillance de courroies tangentielles (3, 5, 6), comme celles utilisées dans une machine pour la production de fils à torsion ou retordus, dans lequel des organes de travail de la machine sont reliés à des entraînements (1, 7, 8) par l'intermédiaire des courroies tangentielles (3, 5, 6) et un dispositif est prévu pour détecter la vitesse de défilement des courroies tangentielles (3, 5, 6), caractérisé en ce qu'un capteur (17, 27, 29) est coordonné à chaque courroie tangentielle (3, 5, 6) pour détecter sa vitesse de défilement et un capteur supplémentaire (18) est coordonné à l'entraînement (1, 7, 8) ou à l'un des entraînements pour détecter sa ou leurs vitesse(s) d'entraînement, et les capteurs sont reliés à au moins une unité d'exploitation (30), laquelle comporte un générateur de rythme (19) qui relie l'unité d'exploitation (30) successivement à chacun des capteurs (17, 27, 29) disposés sur les différentes courroies tangentielles (3, 5, 6).

5. Dispositif selon la revendication 4, dans lequel les courroies tangentielles (3, 5, 6) peuvent être sollicitées par des rouleaux de pression (16, 26, 28), caractérisé en ce que les capteurs (17, 27, 29) sont réalisés comme des génératrices de tension agissant comme des capteurs de vitesse et reliées chacune à l'un des rouleaux de pression (16, 26, 28) ou à l'entraînement (1).

6. Dispositif selon la revendication 4, caractérisé en ce que les capteurs sont des détecteurs disposés fixes et explorant des repères de distances longitudinales.

7. Dispositif selon la revendication 4, caractérisé en ce que l'unité d'exploitation (30) comporte deux compteurs d'impulsions (21, 22) dont l'un (22) est relié au capteur (18) fournissant la vitesse d'entraînement et l'autre compteur (21) est relié successivement à l'un des capteurs (17, 27, 29) sur les courroies tangentielles (3, 5, 6), et que les deux compteurs d'impulsions (21, 22) sont connectés à une unité de comparaison (23) et à un générateur de signal (25).

8. Dispositif selon la revendication 4, caractérisé en ce que le glissement (D) maximal admissible est ajustable au moyen d'un sélecteur (24).

EP 0 294 674 B1

# FIG. 1

# FIG. 2

# FIG. 3

7